# EUROPEAN PATENT SPECIFICATION

(11) **EP 3 708 622 B1**
(45) Date of publication and mention of the grant of the patent: **07.06.2023**
(21) Application number: 19163288.4
(22) Date of filing: 15.03.2019
(51) Int. Cl.: C09D 167/08

(54) **MODIFIED FATTY ACID FOR ALKYD RESINS**
MODIFIZIERTE FETTSÄURE FÜR ALKYDHARZE
ACIDE GRAS MODIFIÉ DE RÉSINES ALKYDES

(43) Date of publication of application: 16.09.2020
(73) Proprietor: OLEON NV, 9940 Evergem (BE)
(72) Inventor: STRUELENS, Pieter, 1755 GOOIK (BE); MAGNABOSCO, Enrico, 47533 KLEVE (DE)
(74) Representative: Santarelli

(56) References cited:
- US-A- 2 744 832
- US-A- 4 131 579

## Description

The present invention relates to the field of coating compositions and more specifically to the alkyd resins used therein. In particular, the present invention concerns alkyd resins that can be used to prepare coating compositions, such as paints and varnishes.

Coating compositions based on alkyd resins are well-known for their ease of applicability on a wide variety of substrates, their good adhesion properties and their esthetical properties. Consequently, alkyd resin based compositions represent an important part of the coating industry.

Alkyd resins are polyesters derived from polycondensation reactions between a polyol and a polycarboxylic acid or a cyclic carboxylic anhydride, modified with a fatty acid or a triglyceride. These alkyd resins have the property to harden to a solid film through chemical reaction (oxidation) with the oxygen of the air. This phenomenon is made possible by the presence of carbon-carbon double bonds which are contained on the fatty acid or triglyceride. This property has favored the use of these alkyd resins as binder in various coating compositions, in particular paints, varnishes, lacquers, etc.

US4131579 discloses an alkyd resin obtained from tall oil fatty acid, oiticica oil, which contains licanic acid, a keto fatty acid, pentaerythritol, p-t-butylbenzoic acid, phthalic anhydride and the glycidyl ester of a branched heptane carboxylic acid.

The drying speed of these alkyd resins depends on the amount and unsaturation of fatty acid(s) or triglyceride(s) used. However, the drying time remains longer than 24 hours, which may be undesirable. To accelerate the drying time, by speeding up the film formation by oxidation, driers (or siccatives) may be used, which are generally metal based, such as metal soaps or metal salts.

The use of cobalt became widespread following the removal of lead in paints. However, there are some concerns about human and environmental toxicity of cobalt-based driers.

Accordingly, in order to limit the negative impact of those metal-containing driers, there is a strong incentive to reduce their uses in alkyd resin based coating compositions.

The inventors surprisingly found that an alkyd resin modified with a specific fatty acid, has a faster drying time, thus making possible the reduction of the quantity of metal-based drier in coating compositions.

The present invention thus relates to an alkyd resin obtainable by polycondensation reactions between:
- a polyol;
- a polycarboxylic acid or a cyclic carboxylic anhydride;
- a keto fatty acid, preferably at least 0.1% by weight based on the total weight of reagents;
- optionally an unsaturated fatty acid;
wherein the keto fatty acid and the optional unsaturated fatty acid are free or comprised in a triglyceride, wherein the oxygen of the carbonyl group of the keto fatty acid is positioned at the ninth carbon atom or at a carbon atom above the ninth, position of carbon atoms being given according to IUPAC nomenclature.

A keto fatty acid is a fatty acid that comprises a carbonyl group, other than the one comprised in the oxycarbonyl group (-O-CO-) of the fatty acid.

In the present application, "keto fatty acid" may be a free keto fatty acid or a keto fatty acid comprised in a triglyceride. Indeed, a triglyceride or triacylglycerol, is a triester formed by a glycerol esterified by three fatty acids. Such a triglyceride may thus comprise one, two or three keto fatty acid(s), and is named in the present application "keto triglyceride". Each of the one, two or three keto fatty acid(s) is named "keto fatty acid(s) comprised in a triglyceride".

The oxygen of the carbonyl group is positioned at the ninth carbon atom (C9) or at a carbon atom above the ninth, position of carbon atoms being given according to IUPAC nomenclature, *e.g*. carbon of the oxycarbonyl group being C1.

More preferably, the oxygen of the carbonyl group is positioned between C9 and C16, even more preferably between C9 and C14, of the keto fatty acid.

In the present application, unless otherwise indicated, ranges are intended to include the limits.

Preferably, a keto fatty acid comprises from 16 to 24 carbon atoms, more preferably from 18 to 24 carbon atoms.

The keto fatty acid may be saturated or unsaturated, preferably saturated.

Advantageously, the keto fatty acid is a keto stearic acid, in particular 9-keto stearic acid also named 9-oxo-octadecanoic acid (CAS 4114-74-3) or 10-keto stearic acid also named 10-oxo-octadecanoic acid (CAS 4158-12-7).

The keto fatty acid may be a mixture of keto fatty acids.

Advantageously, the keto fatty acid is a mixture of 9-keto stearic acid and 10-keto stearic acid.

In the case of the keto fatty acid is comprised in a triglyceride, one, two or three, identical or different, keto fatty acid(s) may be comprised in a keto triglyceride, preferably in a mixture of keto triglycerides. Keto fatty acids comprised in triglyceride(s) are preferably the preferred and advantageous keto fatty acids described above.

Keto triglycerides and free keto fatty acids can be prepared by any known methods to any person skilled in the art. Examples of preparation of keto triglycerides and free keto fatty acids are described in the publication *"*Ketofettsäure-Derivate - Ein einfaches Verfahren zu ihrer Herstellung"; Stoll et al; Fat Sci. Technol.; 9 (1992); 332-337; and in the patent US 5,245,062.

Advantageously, keto triglycerides are first prepared from a mixture of triglycerides comprising fatty acids having carbon-carbon double bond(s) (such as a renewable oil), whose triglyceride carbon-carbon double bonds are first epoxidized by any known methods.

Renewable oils suitable for preparing keto triglycerides are essentially composed of triglycerides (more than 95wt%). A preferred renewable oil for this process comprises a majority of fatty acids comprising a carbon-carbon double bond, preferably at least 50 wt%, more preferably at least 60 wt% on the total weight of fatty acids.

Advantageously, the renewable oil may be chosen from the group constituted by sunflower oils, rapeseed oils, safflower oils, lunaria oil, castor oil and tall oil.

Examples of epoxidation reactions are described in patent US 2,485,160.

The epoxides (or oxirane groups) are then rearranged into carbonyl groups to form keto triglycerides. Examples of such rearrangements are described in the publication mentioned above and in patent US 5,245,062.

Free keto fatty acids are advantageously obtained from those keto triglycerides by saponification and acidification.

Preferably, all carbon-carbon double bonds are epoxidized and then rearranged into carbonyl groups, and therefore keto fatty acids thus obtained are saturated.

Alternatively, carbon-carbon double bonds are partially epoxidized, and therefore keto fatty acids thus obtained are unsaturated.

Preferably, the content of the keto fatty acid is of at least 0.1% by weight based on the total weight of reagents. More preferably, it is comprised between 0.1 and 85% by weight on the total weight of reagents.

By "total weight of reagents", it is intended the weight of all molecules of polyol(s), polycarboxylic acid(s), cyclic carboxylic anhydride(s), keto fatty acid(s) and optional unsaturated fatty acid(s) (fatty acid(s) being free or comprised in a triglyceride) that are allowed to react.

The polyol, preferably, consists of carbon, hydrogen and oxygen atoms.

Preferably, the polyol is chosen from the group constituted by xylose, sucrose, lactose, sorbose, sorbitol, glycerol, polyglycerols, erythritol, glucose, xylitol, maltose, mannitol, pentaerythritol, di-pentaerythritol, tri-pentaerythritol, mannose, 1,2-propanediol, 1,3-propanediol, isosorbide, ethylene glycol, neopentyl glycol, polyethylene glycol, polypropylene glycol, trimethylolpropane and dimer diols.

Preferably, the polyol comprises at most 40 carbon atoms, more preferably at most 15 carbon atoms.

More preferably, the polyol is chosen from the group constituted by sorbitol, glycerol, pentaerythritol, 1,2-propanediol, 1,3-propanediol, isosorbide, ethylene glycol, neopentyl glycol, and trimethylolpropane.

Preferably, the polyol is a renewable polyol, such as glycerol, sorbitol and pentaerythritol.

Preferably, the content of the polyol is of at least 5% by weight, such as between 5 and 35% by weight, more preferably at least 10% by weight, such as between 10 and 25% by weight based on the total weight of reagents.

The polycarboxylic acid preferably consists of carbon, hydrogen and oxygen atoms.

Preferably the polycarboxylic acid is a dicarboxylic acid. In particular, the polycarboxylic acid is chosen from the group constituted by phthalic acid, adipic acid, fumaric acid, maleic acid, glutaric acid and succinic acid.

By "cyclic carboxylic anhydride", it is intended an anhydride of formula R1-CO-O-CO-R2, wherein R1 and R2 form together a cycle (or a ring) including the anhydride function -CO-O-CO-.

Preferably, the cyclic carboxylic anhydride consists of carbon, hydrogen and oxygen atoms.

Preferably, the cyclic carboxylic anhydride is chosen from the group constituted by phthalic anhydride, adipic anhydride, maleic anhydride, glutaric anhydride and succinic anhydride.

Preferably, the content of the polycarboxylic acid or the cyclic carboxylic anhydride is of at least 10% by weight, such as between 10 and 50% by weight, more preferably at least 15% by weight, such as 15 and 35% by weight, based on the total weight of reagents.

By "unsaturated fatty acid", it is intended a fatty acid comprising at least one carbon-carbon double bond and no carbonyl group other than the one comprised in the oxycarbonyl group (-O-CO-) of the fatty acid.

In particular, the unsaturated fatty acid does not comprise a carbonyl group, whose oxygen atom is positioned at the ninth carbon atom (C9) or at a carbon atom above the ninth, position of carbon atoms being given according to IUPAC nomenclature.

In the present application, an "unsaturated fatty acid" may be a free unsaturated fatty acid or an unsaturated fatty acid comprised in a triglyceride.

Preferably, the unsaturated fatty acid is a polyunsaturated fatty acid, more preferably, a fatty acid comprising from 2 to 4, even more preferably from 2 to 3 carbon-carbon double bonds.

The unsaturated fatty acid preferably comprises from 16 to 24 carbon atoms, more preferably from 18 to 24 carbon atoms.

Advantageously, the unsaturated fatty acid is obtained from a renewable oil, such as vegetable oils and residual oils of the pulp or paper industry.

The unsaturated fatty acid may be a fraction of fatty acids. In particular, the unsaturated fatty acid is chosen from the group constituted by oleic acid, linoleic acid, linolenic acid, gadoleic acid, nervonic acid, erucic acid, ricinoleic acid and arachidonic acid. More particularly, the unsaturated fatty acid is chosen from the group constituted by oleic acid, linoleic acid and linolenic acid.

Preferably, the unsaturated fatty acid is a mixture of unsaturated fatty acids. The mixture of unsaturated fatty acids can be a mixture of free unsaturated fatty acids or a mixture of unsaturated fatty acids comprised in triglycerides.

A mixture of free unsaturated fatty acids may be obtained by saponification of triglycerides comprising preferably at least 50 wt% of unsaturated fatty acids, more preferably at least 60 wt% based on the weight of the fatty acids contained in the triglycerides. In particular, the free unsaturated acids are chosen from the group constituted by sunflower fatty acids, linseed fatty acids, soybean fatty acids, rapeseed fatty acids, safflower fatty acids, lunaria fatty acids, castor fatty acids, peanut fatty acids and tall fatty acids.

In the case of the unsaturated fatty acids are comprised in a triglyceride, one, two or three, identical or different, unsaturated fatty acid(s) may be comprised in the triglyceride, preferably, in a mixture of triglycerides.

Thus, triglycerides comprising unsaturated fatty acids, comprise preferably at least 50 wt% of unsaturated fatty acids, more preferably at least 60 wt% based on the weight of the fatty acids contained in the triglycerides. In particular, the unsaturated fatty acids comprised in triglycerides are chosen from the group constituted by sunflower oil, linseed oil, soybean oil, rapeseed oil, safflower oil, lunaria oil, castor oil, peanut oil and tall oil.

Preferably, the content of the unsaturated fatty acid is comprised between 0 and 84.9% by weight on the total weight of reagents.

Advantageously, the content of the keto fatty acid(s) with the optional unsaturated fatty acid(s), is of at least 15% by weight, such as between 15 and 85% by weight, preferably of at least 40% by weight, such as between 40 and 75% by weight based on the total weight of reagents.

Alkyd resin according to the invention may comprise a low content or a high content of keto fatty acid.

In a first embodiment, the content of the keto fatty acid is of at least 15% by weight, such as between 15 and 85% by weight based on the total weight of reagents.

Preferably, the content of the keto fatty acid is of at least 40% by weight, such as between 40 and 75% by weight based on the total weight of reagents.

When such high content of keto fatty acid is used to obtain the alkyd resin of the invention, then unsaturated fatty acid is not necessary in the obtention of the alkyd resin of the invention. Preferably, the content of the unsaturated fatty acid is of at most 10% by weight, more preferably less than 5% by weight, even more preferably, less than 1% by weight, based on the total weight of reagents.

In a preferred embodiment of this first embodiment, the alkyd resin is obtainable by polycondensation reactions between:
- at least 10% by weight of a polyol, such as 10-25% by weight;
- at least 15% by weight of a polycarboxylic acid or a cyclic carboxylic anhydride, such as 15-35% by weight;
- at least 40% by weight of a keto fatty acid, such as 40-75% by weight;
percentage by weight being based on the total weight of reagents.

In a second embodiment, the content of the keto fatty acid is comprised in the range [0.1% - 15%[ by weight based on the total weight of reagents.

[0.1% - 15%[ by weight means that limit 0.1% by weight is included in the range, when limit 15% by weight is excluded.

Preferably, the content of the keto fatty acid is comprised between 0.15 and 10% by weight, more preferably between 0.2 and 5% by weight, based on the total weight of reagents.

When low content of keto fatty acid is used to obtain the alkyd resin of the invention, then unsaturated fatty acid might be required in preparation of the alkyd resin. The content of the unsaturated fatty acid is preferably comprised between 14.9 and 84.9% by weight, more preferably between 30 and 74.85% by weight based on the total weight of reagents.

In preferred embodiment of this second embodiment, the alkyd resin is obtainable by polycondensation reactions between:
- at least 10% by weight of a polyol, such as 10-25% by weight;
- at least 15% by weight of a polycarboxylic acid or a cyclic carboxylic anhydride, such as 15-35% by weight;
- at least 0.15% by weight of a keto fatty acid, such as 0.15-10% by weight;
- at least 30% by weight of an unsaturated fatty acid, such as 30-74.85% by weight;
percentage by weight being based on the total weight of reagents.

The alkyd resins according to the invention have preferably an acid value less than 20, more preferably less than 15, even more preferably less than 10 mg KOH/g. In the present patent application, acid values, unless otherwise indicated, are measured according to standard ISO 660:2009.

The present invention also relates to a process for preparing an alkyd resin comprising polycondensation reactions between:
- a polyol;
- a polycarboxylic acid or a cyclic carboxylic anhydride;
- a keto fatty acid;
- optionally an unsaturated fatty acid;
wherein the keto fatty acid and the optional unsaturated fatty acid are free or comprised in a triglyceride, wherein the oxygen of the carbonyl group of the keto fatty acid is positioned at the ninth carbon atom or at a carbon atom above the ninth, position of carbon atoms being given according to IUPAC nomenclature.

Reagents, polyol, polycarboxylic acid, cyclic carboxylic anhydride, keto fatty acid, and unsaturated fatty acid, are as described above, including preferential and advantageous features and embodiments.

The implementation of polycondensation reactions can be carried out by any conventional method of preparation of alkyd resins known to person skilled in the art.

Preferably, polycondensation reactions are conducted under atmospheric pressure at a temperature of at least 150 °C, more preferably at least 200 °C.

Water formed during the polycondensation reactions is advantageously removed from reacting mixture, preferably by azeotropic distillation using a solvent such as xylene.

Preferably, the polycondensation reactions are conducted under inert atmosphere, such as under nitrogen stream.

A catalyst may be used, such as LiOH and NaOH.

The polycondensation reactions are carried out until the acid value of the mixture is preferably less than 20, more preferably less than 15, even more preferably less than 10 mg KOH/g.

Depending on the content of keto fatty acid, the process can be implemented with more or less unsaturated fatty acid.

In a first embodiment of the process for preparing an alkyd resin, the content of the keto fatty acid is of at least 15% by weight, such as between 15 and 85% by weight based on the total weight of reagents.

Preferably, the content of the keto fatty acid is comprised, more preferably of at least 40% by weight, such as between 40 and 75% by weight, based on the total weight of reagents.

Preferably, the content of the unsaturated fatty acid is of at most 10% by weight, more preferably less than 5% by weight, even more preferably, less than 1% by weight, based on the total weight of reagents.

In the case of the keto fatty acid and the optional unsaturated fatty acid are comprised in a triglyceride, then preferably, a catalyst is used, such as LiOH and NaOH.

In a second embodiment of the process for preparing an alkyd resin, the content of the keto fatty acid is comprised in the range [0.1% - 15%[ by weight based on the total weight of reagents.

Preferably, the content of the keto fatty acid is comprised between 0.15 and 10% by weight, more preferably between 0.2 and 5% by weight, based on the total weight of reagents.

Preferably, the content of the unsaturated fatty acid is comprised between 14.9 and 84.9% by weight, more preferably between 30 and 74.85% by weight, based on the total weight of reagents.

In the case of the keto fatty acid and the optional unsaturated fatty acid are comprised in a triglyceride, then preferably, a catalyst is used, such as LiOH and NaOH.

The present invention relates also the use of the alkyd resin according to the invention, as a binder.

More particularly, the alkyd resin of the invention can be used as a binder for a coating composition, such as a paint, a varnish, a primer and a lacquer.

The present invention concerns also a composition comprising the alkyd resin according to the invention, and a solvent.

The solvent is preferably an organic solvent.

Suitable organic solvents include aliphatic, cycloaliphatic and aromatic hydrocarbons, alcohol ethers, alcohol ether esters, alcohol esters and mixtures thereof. Typical but non-limiting examples are: white spirits, dearomatized white spirits, higher flash point white spirits, isoparafins, butyl glycol, butyl diglycol, propylene glycol mono methyl ether and dipropylene glycol mono methyl ether. Mixture of solvents may also be used.

The solvent content is typically comprised between 5 and 85% by weight, preferably between 15 and 75% by weight, based on the weight of the composition.

However, it may also be an aqueous carrier, including a suitable emulsifier, containing the alkyd resin in the form of an emulsion.

The content of all alkyd resin(s) in the composition of the invention is preferably comprised between 15 and 90% by weight on the weight of the composition, more preferably, between 25 and 80% by weight, based on the weight of the composition.

Since the alkyd resins according to the invention are highly viscous, it is easier to measure their dynamic viscosity after a dilution in a solvent. Thus, a composition of the invention wherein alkyd resin of the invention is diluted to 80wt% in white spirit, have preferably a dynamic viscosity at 23±1 °C of less than 30 000 mPa/s, more preferably less than 20 000 mPa/s, according to standard ASTM D 2196-15.

Preferably, the dynamic viscosity of the composition of the invention wherein alkyd resin of the invention is diluted to 80wt% in white spirit, is of at least 3 000 mPa/s, more preferably at least 5 000 mPa/s, according to standard ASTM D 2196-15.

The composition of the invention may comprise the alkyd resin of the invention comprising a low content or a high content of keto fatty acid.

In a first embodiment of the composition, the composition of the invention comprises an alkyd resin according to the invention comprising a high content of keto fatty acid.

Then, the composition advantageously further comprises an alkyd resin other than the alkyd resin according to the invention.

Advantageously, the composition of the invention comprises:
- the alkyd resin obtainable by polycondensation reactions between:
   - a polyol;
   - a polycarboxylic acid or a cyclic carboxylic anhydride;
   - at least 15% by weight of a keto fatty acid, such as 15-85% by weight, preferably at least 40% by weight, such as 40-75% by weight, based on the weight of reagents;
- an alkyd resin other than an alkyd resin of the invention;
- a solvent.

Preferably, the alkyd resin other than the alkyd resin of the invention is obtainable by polycondensation reactions between:
- a polyol;
- a polycarboxylic acid or a cyclic carboxylic anhydride; and
- an unsaturated fatty acid.

Preferably, the content of keto fatty acid(s) in the composition is of at least 0.1 wt%, more preferably at least 0.15 wt% based on the total weight of all alkyd resins (i.e. of alkyd resins according to the invention and other than according to the invention).

Preferably, the content of keto fatty acid(s) in the composition is of at most 10 wt%, more preferably of at most 6 wt% based on the total weight of all alkyd.

Preferably, the content of the alkyd resin according to the invention is comprised in the range [0.2% - 15%[ by weight, more preferably between 0.3 and 10% by weight, even more preferably between 0.4 and 6% by weight based on the weight of the composition.

Preferably, the content of the alkyd resin other than the alkyd resin according to the invention is comprised between 14.8 and 89.8% by weight, more preferably between 24.7 and 79.7% by weight, based on the weight of the composition.

A particularly preferred composition of the invention comprises:
- 0.3-10 % by weight of an alkyd resin of the invention obtainable by polycondensation reactions between:
   - at least 10% by weight of a polyol, such as 10-25% by weight;
   - at least 15% by weight of a polycarboxylic acid or a cyclic carboxylic anhydride, such as 15-35% by weight;
   - at least 40% by weight of a keto fatty acid, such as 40-75% by weight, based on the total weight of reagents;
- 24.7-79.7% by weight of an alkyd resin other than the alkyd resin of the invention;
- a solvent;
percentage by weight of alkyd resins being based on the weight of the composition.

In a second embodiment of the composition, the composition of the invention comprises an alkyd resin according to the invention comprising a low content of keto fatty acid.

Advantageously, the composition comprises:
- an alkyd resin obtainable by polycondensation reactions between:
   - a polyol;
   - a polycarboxylic acid or a cyclic carboxylic anhydride;
   - [0.1%-15 %[ by weight, preferably 0.15-10% by weight, of a keto fatty acid, based on the total weight of reagents;
   - an unsaturated fatty acid;
- a solvent.

Reagents and their contents are as described above, including preferential and advantageous features.

A particularly preferred composition comprises:
- 15-90 wt% of an alkyd resin obtainable by polycondensation reactions between:
   - at least 10% by weight of a polyol, such as 10-25% by weight;
   - at least 15% by weight of a polycarboxylic acid or a cyclic carboxylic anhydride, such as 15-35% by weight;
   - 0.15-10% by weight of a keto fatty acid;
   - 30-74.85% by weight of a unsaturated fatty acid;
   percentage by weight being based on the total weight of reagents; and

- a solvent;
wt% of alkyd resin being based on the weight of the composition.

Advantageously, the composition according to the invention, further comprises a drier.

The drier of the composition according to the invention is preferably chosen from the driers used in the field of coatings, more particularly driers suitable with alkyd resins. The person skilled in the art knows how to choose the drier(s) adapted to the intended application.

Examples of suitable driers are salts of (cyclo) aliphatic, natural or synthetic acids, such as, for example, linoleic acid, naphtenic acid, 2-ethyl-hexanoic acid and neodecanoic acid of various metal like cobalt, manganese, iron, lead, zirconium, strontium, aluminium, calcium, barium, bismuth, zinc, lithium and potassium.

The composition according to the invention can further comprise one or more of the following additives:
- an anti-skinning agent: it is used to suppress the catalytic activity of the primary metal drying catalysts and to preclude untimely oxidation. Examples of suitable anti-skin agents are methyl ethyl ketoxime, n-butyl ketoxime, cyclohexane ketoxime, diethylhydroxylamine, 2-[(1-methylpropyl)amino]ethanol or phenolic anti-skin agents such as 2-cyclohexylphenol, 4-cyclohexylphenol, 4-tert-amylphenol;
- a colorant and/ or a pigment: the colorant and/or the pigment can be selected from the inorganic or organic, transparent or non-transparent colorants and/or pigments. Examples are titanium dioxide, iron oxides, carbon black, mixed metal oxides, mono- azo and di-azo pigments, copper phthalocyanines and anthraquinones;
- one or more additives, such as fillers, extenders, wetting agents, anti-sagging agents, antioxidants, bactericides, fungicides, insecticides, foam suppressing agents, slip agents, flow promoters, levelling agents, UV-absorbers, HALS-radical scavengers, corrosion inhibitors, matting agents, waxes, flame retardants, loss of dry inhibitors, optical brighteners, dispersing agents, adhesion promoters and air release agents.

The present invention also concerns a process for preparing the composition according to the invention, by mixing the alkyd resin according to the invention with a solvent, and optionally, with a drier and/or an alkyd resin other than the alkyd resin according to the invention.

Advantageously, the composition will be prepared according to the proportions described above.

The present invention also relates to the use of the composition according to the invention as a coating composition.

The coating compositions can be used for coating wood, plastics, leather, textiles, glass, ceramic or metals. They may be applied by any of the known methods, such as spraying, brushing, flooding, casting, dipping and rolling.

Advantageously, the coating composition is a paint, a varnish, a primer or a lacquer.

As illustrated in Example 6, coating composition of the invention have shorter drying time, thanks to the presence of alkyd resin comprising a keto fatty acid. At least 1h is gained for shorter drying times and up to 22h for longer drying times.

The properties, other than drying time, of coating compositions of the invention are not affected by the presence of keto fatty acid in the alkyd resin.

Coating compositions of the invention have the same properties of coating compositions comprising an alkyd resin other than the alkyd resin of the invention.

In particular, hardness of coating compositions according to invention is similar to hardness of coating compositions prepared with alkyd resin other than the alkyd resin of the invention.

Similarly, yellowing behavior of coating compositions of the invention is the same as coating compositions prepared with an alkyd resin other than the alkyd resin of the invention.

The present invention relates also a method for reducing the drying time of a coating composition comprising an alkyd resin, by using a keto fatty acid in the preparation of the alkyd resin.

Keto fatty acid is as described above, including preferential and advantageous features and embodiments.

Preferably, the content of keto fatty acid(s) in the coating composition is of at least 0.1 wt%, more preferably at least 0.15 wt% based on the weight of the alkyd resins present in the coating composition.

Preferably, the content of keto fatty acid(s) in the coating composition is of at most 10 wt%, more preferably of at most 6 wt% based on the weight of the alkyd resins present in the coating composition.

In the method according to the invention, alkyd resin(s) used in the coating composition may contain low or high content of keto fatty acid(s).

In a first embodiment of the method, an alkyd resin comprising an high content of keto fatty acid(s) is used.

Preferably, at least 15% by weight, such as 15-85% by weight, of keto fatty acid(s) is used in the preparation of the alkyd resin, more preferably at least 40% by weight, such as 40-75% by weight, based on the total weight of reagents needed to prepare the alkyd resin.

In a second embodiment of the method, an alkyd resin comprising a low content of keto fatty acid(s) is used.

Preferably, [0.1% - 15%[ by weight of keto fatty acid(s) is used in the preparation of the alkyd resin, more preferably 0.15-10 % by weight, even more preferably 0.2-5% by weight based on the total weight of reagents needed to prepare the alkyd resin.

The invention is further described in the following examples. It will be appreciated that the invention as claimed is not intended to be limited in any way by these examples.

### Example 1: Preparation of keto triglycerides

### Epoxidation

In a reactor equipped with reflux condenser, thermometer and mechanical stirrer, 1000 g of an high oleic sunflower oil (CAS: 8001-21-6) were mixed with 93 g of formic acid (from Merck) and heated to 45°C. Subsequently, 374 g of hydrogen peroxide 50% (from Bernd Kraft) was added dropwise in order to control the exothermicity. The mixture was then allowed to cool down to room temperature. It was then washed with water in order to remove the formic acid and excess hydrogen peroxide, and dried.

Analysis by GC-FID confirmed formation of epoxidized triglycerides with total conversion of carbon-carbon double bonds into epoxides.

### Rearrangement of the oxirane groups into carbonyl groups

In a reactor equipped with reflux condenser, thermometer and mechanical stirrer, 350 g of epoxidized triglycerides prepared in step above and 1.85 g of NaI (CAS:7681-82-5) were mixed together and heated to 220 °C. After 275 min, the mixture was allowed to cool to room temperature.

It was then washed with water and dried.

Analysis by GC-FID confirmed formation of keto triglycerides.

More particularly 80 wt% of fatty acids comprised in the keto triglycerides, are stearic acids bearing a carbonyl group on the ninth or tenth carbon atoms.

### Example 2: Preparation of free keto fatty acids

### Saponification and acidification of the keto triglycerides

224 g of keto triglycerides prepared in Example 1 were treated with 350 g of water and 36 g of NaOH pellets (technical grade) at 90 °C for 2 hours. The resulting keto fatty acid soaps were acidified with 48 g of sulphuric acid (CAS: 7664-93-9) at 90°C during 30 minutes. The resulting free keto fatty acids were washed with water in order to remove the Na₂SO₄ salt and dried.

### Purification of free keto fatty acids

The dried free keto fatty acids obtained in previous step were distilled.

Analysis by HPLC confirmed the complete hydrolysis of triglycerides.

Analysis by GC-FID of the purified free keto fatty acids showed that the keto fatty acids composition of keto fatty acids comprised in keto triglycerides was the same than the free keto fatty acids composition.

A mixture of keto stearic acids, 9-keto stearic and 10-keto stearic acids, was obtained with a purity of 80 wt%.

### Example 3: Preparation of alkyd resins

### 3.1 Reagents used

- Polyol: pentaerythritol from Azelis;
- Cyclic carboxylic anhydride: phthalic anhydride from Merck;
- Keto triglycerides prepared in Example 1;
- Free keto stearic acids prepared in Example 2;
- Free unsaturated fatty acids:
   - sunflower oil fatty acids (sunflower FA), Nouracid HE30 from Oleon;
   - linseed oil fatty acids (linseed FA), Nouracid LE80 from Oleon;
   - soybean oil fatty acids (soybean FA), Radiacid 0121 from Oleon;
- Unsaturated fatty acids comprised in triglycerides (oils):
   - sunflower oil (CAS: 8001-21-6);
   - linseed oil (CAS: 8001-26-1).

### 3.2 Preparation of alkyd resins from free fatty acids (fatty acid process)

### 3.2.1 Alkyd resins 1-3 according to the invention

468 g of free unsaturated fatty acids, 9.6 g of free keto stearic acids, 172.2 g of phthalic anhydride and 150.4 g of pentaerythritol were mixed in a stirred batch reactor together with 25 g of xylene (from Brenntag GmbH) as a water entrainer. Under nitrogen flow, the mixture was stirred at 250 rpm and heated up to 235°C, while water and xylene were evaporated, removed from reactor system and subsequently condensed, and xylene sent back to the reactor.

Polycondensation reactions were carried out until an acid value (AV; according to ISO 660:2009) of 10 mg KOH/g or less was reached.

Finally the xylene was removed from the product mixture by evaporation.

Type and contents of free unsaturated fatty acids and free keto stearic acids used to prepared alkyd resins according to the invention are summarized in Table 1.

### 3.2.2 Alkyd resin 6 according to the invention

Alkyd resin 6 was prepared the same way as described in Example 3.2.1, using 448.8 g of free unsaturated fatty acids and 28.8 g of free keto stearic acids.

### 3.2.3 Alkyd resin 7 according to the invention

Alkyd resin 7 was prepared the same way as described in Example 3.2.1, using 477.6 g of free keto stearic acids prepared in Example 2.

### 3.2.4 Alkyd resin 8 according to the invention

Alkyd resin 8 was prepared the same way as described in Example 3.2.1, using 475.2 g of free unsaturated fatty acids and 2.4 g of free keto stearic acids.

### 3.2.5 Comparative alkyd resins 1-3

Comparative alkyd resins were prepared the same way as described in Example 3.2.1, using 477.6 g of free unsaturated fatty acids and no keto fatty acid.

Data are resumed in Table 1 below:

**Table 1: Fatty acids contents of alkyd resins 1-3 and 6-8 according to the invention and of comparative alkyd resins 1-3 prepared from fatty acids**

| | Sunflower FA (wt%) | Linseed FA (wt%) | Soybean FA (wt%) | Free keto stearic acids of Ex 2 (wt%) |
|---|---|---|---|---|
| Alkyd resin 1 | 58.5 | | | 1.2 |
| Alkyd resin 2 | | 58.5 | | 1.2 |
| Alkyd resin 3 | | | 58.5 | 1.2 |
| Alkyd resin 6 | | 56.1 | | 3.6 |
| Alkyd resin 7 | | | | 59.7 |
| Alkyd resin 8 | | 59.4 | | 0.3 |
| Comparative alkyd resin 1 | 59.7 | | | - |
| Comparative alkyd resin 2 | | 59.7 | | - |
| Comparative alkyd resin 3 | | | 59.7 | - |

| | | | | |
|---|---|---|---|---|
| *wt% based on total weight of reagents | | | | |

### 3.3 Preparation of alkyd resins from keto triglycerides (oil process)

### 3.3.1 Alkyd resins 4 and 5 according to the invention

In a 2L flask, were introduced 493.1 g of triglycerides comprising unsaturated fatty acids, 10.1 g of keto triglycerides, 103.2 g of pentaerythritol and 0.53 g of sodium hydroxide (CAS: 1310-73-2). The mixture was stirred at 250 rpm and at heated to 240°C under a nitrogen flow, for 2 hours. Subsequently, the mixture was allowed to cool down to 170°C, and 3.6 g phosphoric acid 5% (w/w) (CAS: 7664-38-2) was added in the mixture which was stirred for 15 min. Then, a Dean Stark apparatus filled with xylene was placed on the flask, and 193.6 g of phthalic anhydride and 25 g of xylene were introduced into the flask. The reaction mixture was heated to 235°C until acid value reached 10 mg KOH/g or less.

Finally, the xylene was removed from the product mixture by evaporation.

Unsaturated fatty acids used to prepared alkyd resins according to the invention are described in Table 2 below.

### 3.3.2 Comparative alkyd resins 4-5

Comparative alkyd resins were prepared according to the process described in Example 3.3.1, using 503.2 g of unsaturated fatty acids comprised in triglycerides and no keto fatty acid.

Unsaturated fatty acids used to prepared comparative alkyd resins are described in Table 2 below:

**Table 2: Triglycerides contents of alkyd resins 4-5 according to the invention and of comparative alkyd resins 4-5 prepared from oils**

| | Sunflower oil (wt%) | Linseed oil (wt%) | Keto triglycerides of Ex 1 (wt%) |
|---|---|---|---|
| Alkyd resin 4 | 61.64 | | 1.26 |
| Alkyd resin 5 | | 61.64 | 1.26 |
| Comparative alkyd resin 4 | 62.90 | | - |
| Comparative alkyd resin 5 | | 62.90 | - |

### Example 4: Preparation of compositions according to the invention and their characteristics

### 4.1 Preparation of compositions

Compositions 1-5 and 7-9 according to the invention were prepared by mixing 80 wt% of corresponding alkyd resins 1-5 and 7-9 in 20 wt% of white spirit (White Spirit D40 from Brenntag GmbH) at room temperature until a homogeneous phase was obtained.

Comparative compositions 1-5 were prepared the same way using respectively comparative alkyd resins 1-5.

Dilution of alkyd resins in a solvent facilitates their handling, especially when used in final product formulation.

Contents of each composition are described in Table 3 below.

**Table 3: Contents of compositions according to the invention and of comparative compositions**

| | Alkyd resin | Solvent |
|---|---|---|
| Composition 1 | 80 wt% of alkyd resin 1 | 20 wt% of white spirit |
| Composition 2 | 80 wt% of alkyd resin 2 | 20 wt% of white spirit |
| Composition 3 | 80 wt% of alkyd resin 3 | 20 wt% of white spirit |
| Composition 4 | 80 wt% of alkyd resin 4 | 20 wt% of white spirit |
| Composition 5 | 80 wt% of alkyd resin 5 | 20 wt% of white spirit |
| Composition 6 | 80 wt% of alkyd resin 6 | 20 wt% of white spirit |
| Composition 7 | 80 wt% of alkyd resin 7 | 20 wt% of white spirit |
| Composition 8 | 80 wt% of alkyd resin 8 | 20 wt% of white spirit |
| Comparative composition 1 | 80 wt% comparative alkyd resin 1 | 20 wt% of white spirit |
| Comparative composition 2 | 80 wt% comparative alkyd resin 2 | 20 wt% of white spirit |
| Comparative composition 3 | 80 wt% comparative alkyd resin 3 | 20 wt% of white spirit |
| Comparative composition 4 | 80 wt% comparative alkyd resin 4 | 20 wt% of white spirit |
| Comparative composition 5 | 80 wt% comparative alkyd resin 5 | 20 wt% of white spirit |

### 4.2 Acid value

Acid value (AV) is defined as the number of milligrams of potassium hydroxide required to neutralize acid functions present in one gram of a chemical substance. This value, unless otherwise indicated, was measured according to standard ISO 660:2009.

Acid values of some compositions are gathered in Table 3 below.

### 4.3 Dynamic viscosity

Dynamic viscosities were measured at 23±1 °C and 50±5% relative humidity, according to standard ASTM D 2196-15, using spindle 5 at 25 rpm.

Results are gathered in Table 4 below.

**Table 4: Acid values and dynamic viscosities of alkyd resins according to the invention and of comparative alkyd resins**

| | Acid value (mg KOH/g) | Dynamic viscosity at 23±1 °C (mPa.s) |
|---|---|---|
| Composition 1 | 8.6 | 6 136 |
| Composition 2 | 8.1 | 5 928 |
| Composition 3 | 8.4 | 6 160 |
| Composition 4 | 5.2 | 12 750 |
| Composition 5 | 5.5 | 16 960 |
| Composition 6 | 6.7 | 11 840 |
| Composition 8 | 8.3 | 7 776 |
| Comparative composition 1 | 7.5 | 8 384 |
| Comparative composition 2 | 8.0 | 9 510 |
| Comparative composition 3 | 8.4 | 8 328 |
| Comparative composition 4 | 7.4 | 12 770 |
| Comparative composition 5 | 7.1 | 12 295 |

Use of keto fatty acids does not modify greatly dynamic viscosity of resulting alkyd resins compare to dynamic viscosity of comparative alkyd resins.

### Example 5: Preparation of coating compositions

### 5.1 Varnishes according to the invention

### 5.1.1 From an alkyd resin according to the invention

### 5.1.1.1 Varnishes 1-5 and 9

85.5 wt% of a composition according to the invention prepared at Example 4 were diluted in 12.4 wt% of white spirit (D40 from Brenntag GmbH).

Then, 2 wt% of a combination of driers (Ca, Co, Zr) (Octa-Soligen 155 from Borchers) and 0.1 wt% of anti-skinning agent (methyl ethyl ketoxime, CAS: 96-29-7) were added. Weight percentages are based on weight of the varnish.

The mixture was stirred until an homogeneous phase was obtained.

The varnishes obtained were conditioned for 16 hours at 23°C and 50% relative humidity.

### 5.1.1.2 Varnish 6

Varnish 6 was formulated the same way as Varnish 1-5, using composition 6 according to the invention, prepared at Example 4, and the following driers: 0.2 wt% of an iron based drier (Borchi Oxy-coat from Borchers), 0.9 wt% of a calcium based drier (Octa-Soligen Calcium 10 basic from Borchers) and 0.9 wt% of a zirconium based drier (Octa-Soligen Zr 12 from Borchers).

### 5.1.2 From an alkyd resin according to the invention and an alkyd resin other than the one according to the invention

Varnishes 7 and 8 were prepared according to the process described in Example 5.1.1.1, using respectively 0.5 and 6 wt% of composition 7 according to the invention and 85 and 79.5 wt% of comparative composition 5, prepared at Example 4.

### 5.2 Comparative varnishes 1-6

Preparation of comparative varnishes 1-5 were conducted as described in Example 5 .1.1.1, using respectively comparative compositions 1-5 prepared at Example 4.

Comparative varnish 6 was prepared as described above in Example 5.1.1.2 using comparative composition 2, prepared at Example 4.

Detailed formulations of varnishes 1-9 and of comparative varnishes 1-6 are described in Table 5 below:

| | Alkyd resin according to the invention | Comparative Alkyd resin | Solvent |
|---|---|---|---|
| Varnish 1 | 68.4 wt% alkyd resin 1 | - | 29.5wt% |
| Varnish 2 | 68.4 wt% alkyd resin 2 | - | 29.5wt% |
| Varnish 3 | 68.4 wt% alkyd resin 3 | - | 29.5wt% |
| Varnish 4 | 68.4 wt% alkyd resin 4 | - | 29.5wt% |
| Varnish 5 | 68.4 wt% alkyd resin 5 | - | 29.5wt% |
| Varnish 6 | 68.4 wt% alkyd resin 6 | - | 29.5wt% |
| Varnish 7 | 0.4 wt% alkyd resin 7 | 68 wt% comparative alkyd resin 5 | 29.5wt% |
| Varnish 8 | 4.8 wt% alkyd resin 7 | 63.6 wt% comparative alkyd resin 5 | 29.5wt% |
| Varnish 9 | 68.4 wt% alkyd resin 8 | - | 29.5wt% |
| Comparative varnish 1 | - | 68.4 wt% comparative alkyd 1 | 29.5wt% |
| Comparative varnish 2 | - | 68.4 wt% comparative alkyd resin 2 | 29.5wt% |
| Comparative varnish 3 | - | 68.4 wt% comparative alkyd resin 3 | 29.5wt% |
| Comparative varnish 4 | - | 68.4 wt% comparative alkyd resin 4 | 29.5wt% |
| Comparative varnish 5 | - | 68.4 wt% comparative alkyd resin 5 | 29.5wt% |
| Comparative varnish 6 | - | 68.4 wt% comparative alkyd resin 2 | 29.5wt% |

| | | | |
|---|---|---|---|
| Table 5: Varnishes 1-9 according to the invention and of comparative varnishes 1-6 | | | |

### 5.3 Paint according to the invention

Paint 1 was formulated by preparing a mixture A and a mixture B based on the raw materials as described in Table 6 below. Mixture A was obtained by stirring raw materials A at 10 000 rpm at 40°C for 30 min. Mixture B was obtained by stirring raw materials B manually at room temperature for 2 min.

Subsequently, mixture B was added in mixture A and the resulting mixture was agitated at 2000 rpm at 40°C for 10 min.

Then it was filtered through a nylon paint filter (260 µ) to obtain a paint that was stored under constant conditions (23±1 °C and 50±5% relative humidity) for at least 5 h before application.

**Table 6: Formulation of paint 1 according to the invention**

| | Raw Materials | Function(s) | Amount (wt%) |
|---|---|---|---|
| A | Composition 3 of Ex 4 | | 30 |
| | White spirit D 40 from Brenntag | solvent | 10 |
| | Disperbyk-2155 from Byk | wetting and dispersing agent | 2,6 |
| | Kronos 2160 from Kronos | pigment | 26 |
| | Borchi Gol E2 from Borchers | flow promoter and air release agent | 1 |
| B | Composition 3 of Ex 4 | | 20 |
| | White spirit D 40 from Brenntag | solvent | 7,8 |
| | TEGO-WET-270 from Evonik | flow promoter and wetting agent | 1 |
| | Octa soligen 155 from Borchers | drier (Ca, Co, Zn) | 1,3 |
| | Borchi Nox M2 from Borchers | anti-skinning agent | 0,3 |

### 5.4 Comparative paint

Comparative paint 1 was formulated according to method and amounts described in Example 5.3 using comparative composition 3 instead of composition 3.

### Example 6: Evaluation of the drying time of the coating compositions prepared in Example 5

The drying time was measured according to standard ASTM D 5895-13. The coating composition is applied on a glass plate (300x25mm) with a thickness of 76 µm with an application speed of 50 mm/s, at 23°C and 50 +/- 5% relative humidity.

Results obtained are gathered in Table 6 below.

**Table 6: Drying time of varnishes and paint according to the invention and of comparative varnishes and paint**

| | Drying time (hours) |
|---|---|
| Varnish 1 | 6.75 |
| Varnish 2 | 9.25 |
| Varnish 3 | 6.25 |
| Varnish 4 | 9.50 |
| Varnish 5 | 20 |
| Varnish 6 | 7.25 |
| Varnish 7 | 19 |
| Varnish 8 | 16.25 |
| Varnish 9 | 13.75 |
| Paint 1 | 10 |
| Comparative varnish 1 | 8.25 |
| Comparative varnish 2 | 22 |
| Comparative varnish 3 | 11 |
| Comparative varnish 4 | 10.50 |
| Comparative varnish 5 | 38 |
| Comparative varnish 6 | 22.25 |
| Comparative paint 1 | 13 |

Results show that varnishes and paint according to the invention prepared from alkyd resins according to the invention, have a shorter drying time than comparative varnishes and comparative paint prepared from comparative alkyd resins.

This reduction in drying time is observed with both
- coating compositions (varnishes 1-6 and 9 and paint 1) comprising an alkyd resin obtained from low content of keto fatty acids, and
- coating compositions (varnishes 7 and 8) comprising an alkyd resin obtained from high content of keto fatty acids and an alkyd resin other than an alkyd resin of the invention.

This evidences that presence of keto fatty acids in an alkyd resin contained in a varnish or a paint, reduces the drying time of these coating compositions.

Moreover, this effect of keto fatty acid on drying time is emphasized when polyunsaturated compounds are contained in alkyd resin. Indeed, the more double bonds are contained on a same fatty acid, free or comprised in a triglyceride, used to prepare the alkyd resin, the greater the difference in drying time between the coating comprising an alkyd resin according to the invention and the coating comprising an alkyd resin other than the alkyd resin of the present invention. This effect can be observed by comparing varnishes 2 and 6 with comparative varnish 2, and varnishes 5, 7 and 8 with comparative varnish 5, all those varnishes containing alkyd resins prepared with linseed fatty acids or linseed oil, both comprising from 45 to 60 wt% of linolenic acid.

## Claims

1. Alkyd resin obtainable by polycondensation reactions between
- a polyol;
- a polycarboxylic acid or a cyclic carboxylic anhydride;
- a keto fatty acid;
- optionally an unsaturated fatty acid;
wherein the keto fatty acid and the optional unsaturated fatty acid are free or comprised in a triglyceride; and
wherein the oxygen of the carbonyl group of the keto fatty acid is positioned at the ninth carbon atom or at a carbon atom above the ninth, position of carbon atoms being given according to IUPAC nomenclature.

2. Alkyd resin according to claim 1, wherein the content of the keto fatty acid is of at least 15% by weight, based on the total weight of reagents.

3. Alkyd resin according to claim 1, wherein the content of the keto fatty acid is comprised in the range [0.1% - 15%[ by weight based on the total weight of reagents.

4. Alkyd resin according to any of claims 1 to 3, wherein the polyol content is of at least 5% by weight, based on the total weight of reagents.

5. Alkyd resin according to any of claims 1 to 4, wherein the content of the polycarboxylic acid or the cyclic carboxylic anhydride is of at least 10% by weight, based on the total weight of reagents.

6. Process for preparing an alkyd resin comprising polycondensation reactions between:
- a polyol;
- a polycarboxylic acid or a cyclic carboxylic anhydride;
- a keto fatty acid;
- optionally an unsaturated fatty acid;
wherein the keto fatty acid and the optional unsaturated fatty acid are free or comprised in a triglyceride; and
wherein the oxygen of the carbonyl group of the keto fatty acid is positioned at the ninth carbon atom or at a carbon atom above the ninth, position of carbon atoms being given according to IUPAC nomenclature.

7. Process for preparing an alkyd resin according to claim 6, wherein the content of the keto fatty acid is of at least 15% by weight, based on the total weight of reagents.

8. Process for preparing an alkyd resin according to claim 6, wherein the content of the keto fatty acid is comprised in the range [0.1% - 15%[ by weight based on the total weight of reagents.

9. Use of the alkyd resin according to any of claims 1 to 5, as a binder.

10. Composition comprising the alkyd resin according to any of claims 1 to 5, and a solvent.

11. Composition according to claim 10, further comprising an alkyd resin other than the alkyd resin according to any of claims 1 to 5.

12. Composition according to claim 10 or 11, further comprising a drier.

13. Process for preparing the composition according to any of claims 10 to 12, by mixing the alkyd resin according to any of claims 1 to 5, with a solvent, and optionally, with a drier and/or an alkyd resin other than the alkyd resin according to any of claims 1 to 5.

14. Use of the composition according to any of claims 10 to 12, as a coating composition.

15. Method for reducing the drying time of a coating composition comprising an alkyd resin, by using a keto fatty acid in the preparation of the alkyd resin, wherein the oxygen of the carbonyl group of the keto fatty acid is positioned at the ninth carbon atom or at a carbon atom above the ninth, position of carbon atoms being given according to IUPAC nomenclature.

## Patentansprüche

1. Alkydharz, erhältlich durch Polykondensationsreaktionen zwischen
- einem Polyol;
- einer Polycarbonsäure oder eines cyclischen Carbonsäureanhydrids;
- einer Ketofettsäure;
- optional einer ungesättigten Fettsäure;
wobei die Ketofettsäure und die optional ungesättigte Fettsäure frei oder in einem Triglycerid umfasst sind; und
wobei der Sauerstoff der Carbonylgruppe der Ketofettsäure am neunten Kohlenstoffatom oder an einem Kohlenstoffatom oberhalb des neunten angeordnet ist, wobei die Position der Kohlenstoffatome gemäß der IUPAC-Nomenklatur angegeben ist.

2. Alkydharz nach Anspruch 1, wobei der Gehalt der Ketofettsäure mindestens 15 Gew.-%, bezogen auf das Gesamtgewicht der Reagenzien, beträgt.

3. Alkydharz nach Anspruch 1, wobei der Gehalt der Ketofettsäure im Bereich von [0,1 Gew.-%-15 Gew.-%[, bezogen auf das Gesamtgewicht der Reagenzien, umfasst ist.

4. Alkydharz nach einem der Ansprüche 1 bis 3, wobei der Polyolgehalt mindestens 5 Gew.-%, bezogen auf das Gesamtgewicht der Reagenzien, beträgt.

5. Alkydharz nach einem der Ansprüche 1 bis 4, wobei der Gehalt an der Polycarbonsäure oder dem cyclischen Carbonsäureanhydrid mindestens 10 Gew.-%, bezogen auf das Gesamtgewicht der Reagenzien, beträgt.

6. Prozess zur Zubereitung eines Alkydharzes, umfassend Polykondensationsreaktionen zwischen:
- einem Polyol;
- einer Polycarbonsäure oder eines cyclischen Carbonsäureanhydrids;
- einer Ketofettsäure;
- optional einer ungesättigten Fettsäure;
wobei die Ketofettsäure und die optional ungesättigte Fettsäure frei oder in einem Triglycerid umfasst sind; und,
wobei der Sauerstoff der Carbonylgruppe der Ketofettsäure am neunten Kohlenstoffatom oder an einem Kohlenstoffatom oberhalb des neunten angeordnet ist, wobei die Position der Kohlenstoffatome gemäß der IUPAC-Nomenklatur angegeben ist.

7. Prozess zur Zubereitung eines Alkydharzes nach Anspruch 6, wobei der Gehalt der Ketofettsäure mindestens 15 Gew.-%, bezogen auf das Gesamtgewicht der Reagenzien, beträgt.

8. Prozess zur Zubereitung eines Alkydharzes nach Anspruch 6, wobei der Gehalt der Ketofettsäure im Bereich von [0,1 Gew.-%-15 Gew.-%[, bezogen auf das Gesamtgewicht der Reagenzien, umfasst ist.

9. Verwendung des Alkydharzes nach einem der Ansprüche 1 bis 5 als Bindemittel.

10. Zusammensetzung, die das Alkydharz nach einem der Ansprüche 1 bis 5 und ein Lösungsmittel umfasst.

11. Zusammensetzung nach Anspruch 10, die ferner ein anderes Alkydharz als das Alkydharz nach einem der Ansprüche 1 bis 5 umfasst.

12. Zusammensetzung nach Anspruch 10 oder 11, die ferner einen Trockner umfasst.

13. Prozess zur Zubereitung der Zusammensetzung nach einem der Ansprüche 10 bis 12, durch Mischen des Alkydharzes nach einem der Ansprüche 1 bis 5 mit einem Lösungsmittel und gegebenenfalls mit einem Trockner und/oder einem anderen Alkydharz als dem Alkydharz nach einem der Ansprüche 1 bis 5.

14. Verwendung der Zusammensetzung nach einem der Ansprüche 10 bis 12 als Beschichtungszusammensetzung.

15. Verfahren zur Verringerung der Trocknungszeit einer Beschichtungszusammensetzung, die ein Alkydharz umfasst, durch Verwendung einer Ketofettsäure bei der Zubereitung des Alkydharzes, wobei der Sauerstoff der Carbonylgruppe der Ketofettsäure am neunten Kohlenstoffatom oder an einem Kohlenstoffatom oberhalb des neunten angeordnet ist, wobei die Position der Kohlenstoffatome gemäß der IUPAC-Nomenklatur angegeben ist.

## Revendications

1. Résine alkyde pouvant être obtenue par des réactions de polycondensation entre
- un polyol ;
- un acide polycarboxylique ou un anhydride carboxylique cyclique ;
- un céto-acide gras ;
- facultativement un acide gras insaturé ;
dans laquelle le céto-acide gras et l'acide gras insaturé facultatif sont libres ou compris dans un triglycéride ; et
dans laquelle l'oxygène du groupe carbonyle du céto-acide gras est positionné au niveau du neuvième atome de carbone ou au niveau d'un atome de carbone au-dessus du neuvième, la position des atomes de carbone étant donnée conformément à la nomenclature IUPAC.

2. Résine alkyde selon la revendication 1, dans laquelle la teneur en céto-acide gras est d'au moins 15 % en poids, sur la base du poids total des réactifs.

3. Résine alkyde selon la revendication 1, dans laquelle la teneur en céto-acide gras est comprise dans la plage de [0,1 % à 15 %[ en poids sur la base du poids total des réactifs.

4. Résine alkyde selon l'une quelconque des revendications 1 à 3, dans laquelle la teneur en polyol est d'au moins 5 % en poids, sur la base du poids total des réactifs.

5. Résine alkyde selon l'une quelconque des revendications 1 à 4, dans laquelle la teneur en acide polycarboxylique ou en anhydride carboxylique cyclique est d'au moins 10 % en poids, sur la base du poids total des réactifs.

6. Procédé de préparation d'une résine alkyde comprenant des réactions de polycondensation entre :
- un polyol ;
- un acide polycarboxylique ou un anhydride carboxylique cyclique ;
- un céto-acide gras ;
- facultativement un acide gras insaturé ;
dans lequel le céto-acide gras et l'acide gras insaturé facultatif sont libres ou compris dans un triglycéride ; et
dans lequel l'oxygène du groupe carbonyle du céto-acide gras est positionné au niveau du neuvième atome de carbone ou au niveau d'un atome de carbone au-dessus du neuvième, la position des atomes de carbone étant donnée conformément à la nomenclature IUPAC.

7. Procédé de préparation d'une résine alkyde selon la revendication 6, dans lequel la teneur en céto-acide gras est d'au moins 15 % en poids, sur la base du poids total des réactifs.

8. Procédé de préparation d'une résine alkyde selon la revendication 6, dans lequel la teneur en céto-acide gras est comprise dans la plage de [0,1 % à 15 %[ en poids sur la base du poids total des réactifs.

9. Utilisation de la résine alkyde selon l'une quelconque des revendications 1 à 5, en tant que liant.

10. Composition comprenant la résine alkyde selon l'une quelconque des revendications 1 à 5, et un solvant.

11. Composition selon la revendication 10, comprenant en outre une résine alkyde autre que la résine alkyde selon l'une quelconque des revendications 1 à 5.

12. Composition selon la revendication 10 ou 11, comprenant en outre un agent siccatif.

13. Procédé de préparation de la composition selon l'une quelconque des revendications 10 à 12, par mélange de la résine alkyde selon l'une quelconque des revendications 1 à 5, avec un solvant, et facultativement avec un agent siccatif et/ou une résine alkyde autre que la résine alkyde selon l'une quelconque des revendications 1 à 5.

14. Utilisation de la composition selon l'une quelconque des revendications 10 à 12, en tant que composition de revêtement.

15. Procédé de réduction du temps de séchage d'une composition de revêtement comprenant une résine alkyde, en utilisant un céto-acide gras dans la préparation de la résine alkyde, dans lequel l'oxygène du groupe carbonyle du céto-acide gras est positionné au niveau du neuvième atome de carbone ou au niveau d'un atome de carbone au-dessus du neuvième, la position des atomes de carbone étant donnée conformément à la nomenclature IUPAC.
